# EUROPÄISCHE PATENTSCHRIFT

(11) **EP 1 873 004 B1**
(45) Veröffentlichungstag und Bekanntmachung des Hinweises auf die Patenterteilung: **18.09.2013**
(21) Anmeldenummer: 07012323.7
(22) Anmeldetag: 23.06.2007
(51) Int. Cl.: B60N 2/20, B60N 2/30

(54) **Kraftfahrzeugsitz mit einer Rückenlehne, die automatisch von der Gebrauchsstellung in die Nichtgebrauchsstellung verschwenkbar ist**
Motor vehicle seat with a back rest which can be automatically pivoted from an active to an inactive position
Siège de véhicule automobile doté d'un dossier pouvant pivoter automatiquement de la position d'utilisation en position au repos

(30) Priorität: 01.07.2006 DE 102006030516
(43) Veröffentlichungstag der Anmeldung: 02.01.2008
(73) Patentinhaber: GM Global Technology Operations LLC, Detroit, MI 48265-3000 (US)
(72) Erfinder: Huber, Kirsten, 55124 Mainz (DE); Maier, Jürgen, 67808 Weitersweiler (DE); Völz, Reimer, 65428 Rüsselsheim (DE)
(74) Vertreter: Daniel, Ulrich W.P.

(56) Entgegenhaltungen:
- EP-A- 1 468 867
- DE-A1-102004 054 165
- DE-U1-202005 014 492

## Beschreibung

Die vorliegende Erfindung betrifft einen Kraftfahrzeugsitz mit einer Rückenlehne, die entgegen der Vorspannkraft einer Drehstabfeder, die einen abgewinkelten Stützabschnitt aufweist, der innerhalb einer feststehenden Aufnahme abgestützt ist, in einer geneigten Gebrauchsstellung lösbar arretiert ist, wobei die Rückenlehne nach dem Lösen der Arretierung von der Gebrauchsstellung in eine im Wesentlichen horizontale Nichtgebrauchsstellung verschwenkt wird.

Ein Kraftfahrzeugsitz der genannten Art ist beispielsweise in der DE 20 2005 014 492 U1 offenbart. Der bekannte Kraftfahrzeugsitz umfasst eine Rückenlehne, die um eine Schwenkachse von einer Gebrauchsstellung in eine Nichtgebrauchsstellung verschwenkt werden kann, um beispielsweise die Ladekapazität eines dahinter angeordneten Laderaumes zu erhöhen. Um die Rückenlehne von der Gebrauchsstellung automatisch in die Nichtgebrauchsstellung verschwenken zu können, ist ein Lehnenverschwenkantrieb vorgesehen, der ein Verschwenken der Rückenlehne bewirkt, sobald die Arretierung der Rückenlehne in der Gebrauchsstellung aufgehoben wurde. Der Lehnenverschwenkantrieb ist bei dem bekannten Kraftfahrzeugsitz als Drehstabfeder ausgebildet, die eine Vorspannkraft auf die in der Gebrauchsstellung arretierte Rückenlehne ausübt. Wird nun die Arretierung gelöst so wird die Rückenlehne durch die Drehstabfeder zunächst aus der Gebrauchsstellung in eine Senkrechtstellung verschwenkt. Von diesem Zeitpunkt an wird die Schwenkbewegung ferner durch das Eigengewicht der Rückenlehne unterstützt, bis die im Wesentlichen horizontale Nichtgebrauchsstellung erreicht ist. Um zu verhindern, dass die Rückenlehne mit zu starker Wucht auf das Sitzteil des Kraftfahrzeugsitzes aufschlägt, was zu Beschädigungen von Gegenständen oder gar Verletzungen von Personen führen kann, ist im Bereich der Schwenkachse der Rückenlehne ein spezieller Regel- und Dämpfungsmechanismus vorgesehen, der die Schwenkbewegung verlangsamt. Der bekannte Kraftfahrzeugsitz hat sich bewährt, ist jedoch mit dem Nachteil behaftet, dass die Dämpfung der Schwenkbewegung der Rückenlehne unter sehr großem konstruktivem Aufwand erfolgt. Darüber hinaus lässt sich die Rückenlehne des bekannten Kraftfahrzeugsitzes nur mühsam wieder zurück in die Gebrauchsstellung bringen.

Die gattungsgemäße DE 10 2004 054 165 A1 beschreibt einen Kraftfahrzeugsitz mit einer Rückenlehne, die entgegen der Vorspannkraft einer Torsionsfeder, die einen abgewinkelten ersten Schenkel aufweist, der innerhalb einer feststehenden Führung abgestützt ist, in einer geneigten Gebrauchsstellung lösbar arretiert ist. Die Rückenlehne kann nach dem Lösen der Arretierung von der Gebrauchsposition in eine im Wesentlichen horizontale Cargo-Position verschwenkt werden. Dabei wirkt die Torsionsfeder derart mit der Rückenlehne zusammen, dass die Torsionsfeder zwischen einer Zwischenposition und der horizontalen Cargo-Position eine dem Eigengewicht der Rückenlehne entgegengerichtete Rückstellkraft aufbringt, wodurch die Schwenkbewegung der Rückenlehne vor dem Erreichen der Cargo-Position gedämpft wird.

Der zuvor beschriebene Kraftfahrzeugsitz mit Torsionsfeder hat sich bewährt, ist jedoch insofern von Nachteil, als dass mit dem Verschwenken der Rückenlehne eine starke Geräuschentwicklung einhergeht, wobei ferner die Handhabung des Kraftfahrzeugsitzes beim Verschwenken der Rückenlehne aus der Gebrauchsposition erschwert ist.

Es ist daher eine Aufgabe der vorliegenden Erfindung, einen Kraftfahrzeugsitz der gattungsgemäßen Art zu schaffen, der zum einen eine sichere Dämpfung der Schwenkbewegung der Rückenlehne bei geringem konstruktivem Aufwand sowie ein einfaches Zurückführen der Rückenlehne von der Nichtgebrauchsstellung in die Gebrauchsstellung ermöglicht und darüber hinaus zum anderen ein komfortables Verschwenken von der Gebrauchsstellung in die Nichtgebrauchsstellung sowie einen geräuscharmen Betrieb ermöglicht.

Diese Aufgabe wird durch die in Patentanspruch 1 angegebenen Merkmale gelöst. Vorteilhafte Ausführungsformen der Erfindung sind Gegenstand der Unteransprüche.

Der erfindungsgemäße Kraftfahrzeugsitz weist eine Rückenlehne auf, die entgegen der Vorspannkraft einer Drehstabfeder, die einen abgewinkelten Stützabschnitt aufweist, der innerhalb einer feststehenden Aufnahme abgestützt ist, in einer geneigten Gebrauchsstellung lösbar arretiert ist. Die Drehstabfeder hat den Vorteil, dass diese besonders wenig Bauraum in Anspruch nimmt. Bei der feststehenden Aufnahme kann es sich beispielsweise um eine fahrzeugfeste Vertiefung oder eine Vertiefung an einem feststehenden Teil des Kraftfahrzeugsitzes handeln. Die Rückenlehne wird nach dem Lösen der Arretierung durch die Vorspannkraft und das Eigengewicht der Rückenlehne automatisch von der Gebrauchsstellung in eine im Wesentlichen horizontale Nichtgebrauchsstellung verschwenkt, so dass die Rückenlehne besonders komfortabel von der Gebrauchs- in die Nichtgebrauchsstellung verschwenkbar ist. Ferner wirkt die Drehstabfeder derart mit der Rückenlehne zusammen, dass die Drehstabfeder zwischen einer Zwischenstellung und der horizontalen Nichtgebrauchsstellung eine dem Eigengewicht der Rückenlehne entgegengerichtete Rückstellkraft aufbringt. Diese Rückstellkraft könnte beispielsweise einen Teil der Kraft betragen, die durch das Eigengewicht der Rückenlehne erzeugt wird, wobei sich die Rückstellkraft der Drehstabfeder bei fortschreitender Schwenkbewegung entsprechend erhöhen kann. Der erfindungsgemäße Kraftfahrzeugsitz hat somit zunächst den Vorteil, dass die Schwenkbewegung der Rückenlehne durch die vorhandene Drehstabfeder selbst bzw. durch dessen Rückstellkraft gegen Ende der Schwenkbewegung gedämpft wird. Auf diese Weise bewirkt die Drehstabfeder anfangs die Schwenkbewegung und gegen Ende der Schwenkbewegung deren Dämpfung. Auf zusätzliche Dämpfungsmittel könnte grundsätzlich verzichtet werden, so dass ein einfacher Aufbau erzielt wird. Darüber hinaus bewirkt die in der Nichtgebrauchsstellung der Rückenlehne weiterhin wirkende Rückstellkraft der Drehstabfeder, dass die Rückenlehne ohne größere Mühe von der Nichtgebrauchsstellung in die Gebrauchsstellung zurückgeführt werden kann. Um Klappergeräusche zu vermeiden, die insbesondere dann im Bereich zwischen dem Stützabschnitt und der Aufnahme auftreten können, wenn die Drehstabfeder keine Vorspannkraft mehr ausübt, sondern zur Ausübung einer entgegengesetzten Rückstellkraft übergeht, weist der Stützabschnitt und/oder die Aufnahme einen Dämpfungsüberzug auf.

In einer bevorzugten Ausführungsform des erfindungsgemäßen Kraftfahrzeugsitzes wird die Rückenlehne von der geneigten Gebrauchsstellung durch die Vorspannkraft der Drehstabfeder und entgegen dem Eigengewicht der Rückenlehne in eine Vertikalstellung und von der Vertikalstellung in die horizontale Nichtgebrauchsstellung verschwenkt, wobei das Verschwenken zwischen der Vertikalstellung und der Nichtgebrauchsstellung durch das Eigengewicht der Rückenlehne unterstützt ist. Unter der Vertikalstellung der Rückenlehne ist diejenige Stellung der Rückenlehne zu verstehen, in der die Rückenlehne im Wesentlichen vertikal bzw. senkrecht ausgerichtet ist.

In einer weiteren bevorzugten Ausführungsform des erfindungsgemäßen Kraftfahrzeugsitzes liegt die Zwischenstellung zwischen der Vertikalstellung und der Nichtgebrauchsstellung.

In einer besonders bevorzugten Ausführungsform des erfindungsgemäßen Kraftfahrzeugsitzes weist die Drehstabfeder einen bogenförmigen ersten Abschnitt, dessen freies Ende an der Rückenlehne angeordnet ist, und einen geraden zweiten Abschnitt auf, demgegenüber der Stützabschnitt abgewinkelt ist.

Um die auf die Drehstabfeder einwirkenden Beanspruchungen nicht auf die Verbindungsstelle zu der Rückenlehne bzw. die Rückenlehne selbst zu übertragen, ist das freie Ende des ersten Abschnitts bei einer vorteilhaften Ausführungsform des erfindungsgemäßen Kraftfahrzeugsitzes in einer Führung an der Rückenlehne rotierbar und längsverschiebbar geführt. Auf diese Weise wird lediglich die Schwenkkraft auf die Rückenlehne übertragen und die Verbindungsstelle zwischen dem freien Ende und der Rückenlehne wird nicht so stark belastet.

Um eine besonders sichere und zuverlässige Verbin-dungsstelle zwischen dem freien Ende der Drehstabfeder und der Rückenlehne zu erhalten, ist die Führung in einer weiteren vorteilhaften Ausführungsform des erfindungsgemäßen Kraftfahrzeugsitzes eine das freie Ende umgebende Hülse.

Um eine sichere Positionierung und somit die Funktionstüchtigkeit der Drehstabfeder zu gewährleisten, ist in einer weiteren bevorzugten Ausführungsform des erfindungsgemäßen Kraftfahrzeugsitzes ein Stützelement an der Rückenlehne vorgesehen, an dem der bogenförmige erste Abschnitt der Drehstabfeder seitlich abgestützt ist.

Um weiterhin eine sichere Anordnung der Drehstabfeder innerhalb der Rückenlehne sicher zu stellen, sind die Führung und/oder das Stützelement in einer weiteren vorteilhaften Ausführungsform des erfindungsgemäßen Kraftfahrzeugsitzes an einem Lehnenrahmen der Rückenlehne befestigt. Da der Lehnenrahmen maßgeblich für die Steifigkeit der Rückenlehne ist, ist auch die Positioniergenauigkeit der Drehstabfeder hierdurch gewährleistet.

In einer weiteren vorteilhaften Ausführungsform des erfindungsgemäßen Kraftfahrzeugsitzes wird der Dämpfungsüberzug von einem Kunststoff- oder Gummiüberzug gebildet.

Gemäß einer weiteren bevorzugten Ausführungsform des erfindungsgemäßen Kraftfahrzeugsitzes erstreckt sich der zweite Abschnitt der Drehstabfeder entlang der Schwenkachse der Rückenlehne.

In einer weiteren bevorzugten Ausführungsform des erfindungsgemäßen Kraftfahrzeugsitzes ist ein zusätzlicher Dämpfungsmechanismus vorgesehen, der die Schwenkbewegung der Rückenlehne verlangsamt. Diese Ausführungsform kann dann gewählt werden, wenn die Dämpfung durch die Rückstellkraft der Drehstabfeder allein nicht ausreichend sein sollte. Als zusätzlicher Dämpfungsmechanismus käme beispielsweise der aus der DE 20 2005 014 492 U1 bekannte Dämpfungsmechanismus in Frage.

Die Erfindung wird im Folgenden anhand einer beispielhaften Ausführungsform unter Bezugnahme auf die beigefügten Zeichnungen näher erläutert. Es zeigen:
Fig. 1 eine Vorderansicht einer Ausführungsform des erfindungsgemäßen Kraftfahrzeugsitzes mit der Rückenlehne in der Gebrauchsstellung,
Fig. 2 eine Seitenansicht des Kraftfahrzeugsitzes von Fig. 1,
Fig. 3 den Kraftfahrzeugsitz von Fig. 2 mit der Rückenlehne in der Vertikalstellung,
Fig. 4 den Kraftfahrzeugsitz von Fig. 3 mit der Rückenlehne in der Zwischenstellung und
Fig. 5 den Kraftfahrzeugsitz von Fig. 4 mit der Rückenlehne in der Nichtgebrauchsstellung.

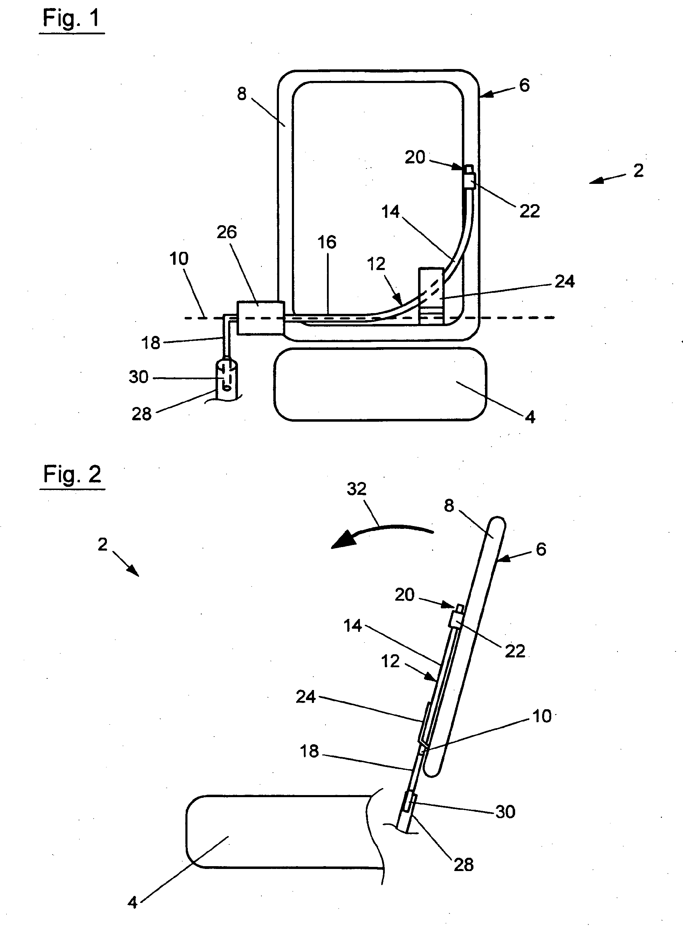

Die Fig. 1 bzw. 2 zeigen eine Ausführungsform des erfindungsgemäßen Kraftfahrzeugsitzes 2 in einer Vorder- bzw. Seitenansicht. Der Kraftfahrzeugsitz 2 weist ein Sitzteil 4, auf dem ein Fahrzeuginsasse (nicht dargestellt) Platz nehmen kann, sowie eine Rückenlehne 6 auf, gegen die sich der auf dem Sitzteil 4 sitzende Fahrzeuginsasse mit dem Rücken lehnen kann. Die Rückenlehne 6 ist in den Figuren nicht vollständig dargestellt, vielmehr ist zur Erhöhung der Anschaulichkeit lediglich der innen liegende Lehnenrahmen 8 gezeigt.

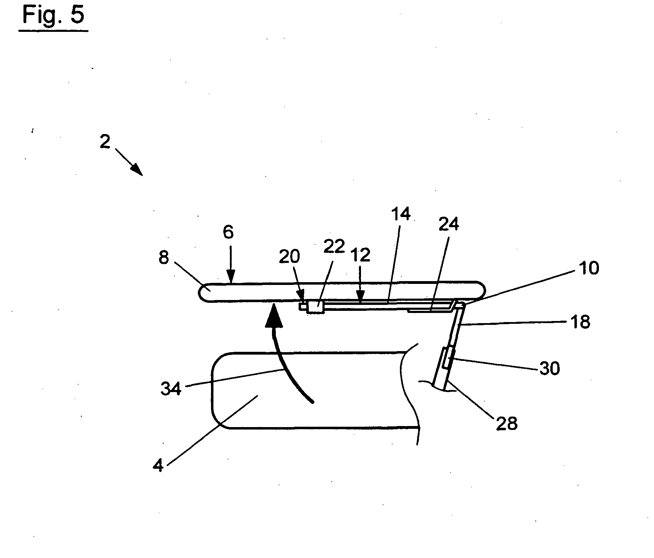

Die Rückenlehne 6 weist eine Schwenkachse 10 auf, um die die Rückenlehne 6 von der in den Fig. 1 und 2 gezeigten Gebrauchsstellung in die in Fig. 5 gezeigte Nichtgebrauchsstellung verschwenkt werden kann, wie dies später eingehend erläutert wird. Die Rückenlehne 8 ist über eine nicht dargestellte Arretierung in der gezeigten Gebrauchsstellung arretiert.

Der Kraftfahrzeugsitz 2 weist ferner ein Federelement in Form einer Drehstabfeder 12 auf. Die Drehstabfeder 12 umfasst einen bogenförmigen ersten Abschnitt 14, einen geraden zweiten Abschnitt 16 und einen gegenüber dem zweiten Abschnitt 16 abgewinkelten Stützabschnitt 18. Das freie Ende 20 des ersten Abschnitts 14 ist mit der Rückenlehne 6 in der Art verbunden, dass es sich in eine hülsenförmige Führung 22 erstreckt, die an dem Lehnenrahmen 8 befestigt ist und das freie Ende umfangsmäßig vollständig umgibt. Innerhalb der Führung 22 ist das freie Ende 20 rotierbar und längsverschiebbar geführt, so dass die in der Drehstabfeder 12 wirkenden Beanspruchungen nicht auf die Führung 22 oder den Lehnenrahmen 8 wirken. Lediglich die Kräfte zur Durchführung der Schwenkbewegung werden übertragen, wie dies später erläutert wird.

An dem Lehnenrahmen 8 der Rückenlehne 6 ist ferner ein Stützelement 24 vorgesehen. Das strebenartige Stützelement 24 erstreckt sich derart zu einer Seite des bogenförmigen zweiten Abschnitts 14 der Drehstabfeder 12, dass dieser Abschnitt seitlich abgestützt ist. Auf diese Weise ist es der Drehstabfeder 12 trotz großer Belastung nicht möglich, eine Ausweichbewegung zu vollziehen, vielmehr wird die Drehstabfeder in einer Ebene gehalten, die sich parallel zur Ebene der Rückenlehne 6 bzw. des Lehnenrahmens 8 erstreckt. Auf diese Weise sind die Positionierung und die Funktionsfähigkeit der Drehstabfeder 12 sichergestellt.

Der sich an den ersten Abschnitt 14 anschließende gerade zweite Abschnitt 16 der Drehstabfeder 12 erstreckt sich entlang der Schwenkachse 10 der Rückenlehne 6 durch einen seitlich angeordneten Regel- und Dämpfungsmechanismus 26. Der Aufbau dieses Regel- und Dämpfungsmechanismus 26, der eine weitere Dämpfung bzw. Regelung der Schwenkbewegung der Rückenlehne 6 bewirkt, ist bereits aus der DE 20 2005 014 492 U1 bekannt, so dass hier auf die entsprechende Druckschrift verwiesen sein soll.

Der sich an den geraden zweiten Abschnitt 16 anschließende Stützabschnitt 18 erstreckt sich in eine rohrförmige Aufnahme 28, die das Ende des Stützabschnittes 18 umfangsmäßig umschließt. Der Stützabschnitt 18 weist an diesem Ende einen dämpfenden Kunststoffüberzug 30 auf, so dass Klappergeräusche unterbunden sind, wenn der Stützabschnitt 18 gegen die Wandung der rohrförmigen Aufnahme 28 schlägt, wie dies später erläutert wird.

Nachstehend werden die Funktionsweise sowie die weiteren Merkmale des Kraftfahrzeugsitzes 2 unter Bezugnahme auf die Fig. 2 bis 5 beschrieben.

Fig. 2 zeigt den Kraftfahrzeugsitz 2 mit der Rückenlehne 6 in einer leicht nach hinten geneigten Gebrauchsstellung. In dieser Gebrauchsstellung ist der Stützabschnitt 18 in der Aufnahme 28 und das freie Ende 20 in der Führung 22 derart abgestützt, dass die Drehstabfeder 12 vorgespannt ist. Diese Vorspannkraft würde eine Rotation der Rückenlehne 6 um die Schwenkachse 10 bewirken, wie dies anhand des Pfeils 32 angedeutet ist, jedoch ist die Rückenlehne 6 in Fig. 2 noch immer durch die nicht dargestellte Arretierung in der Gebrauchsstellung arretiert.

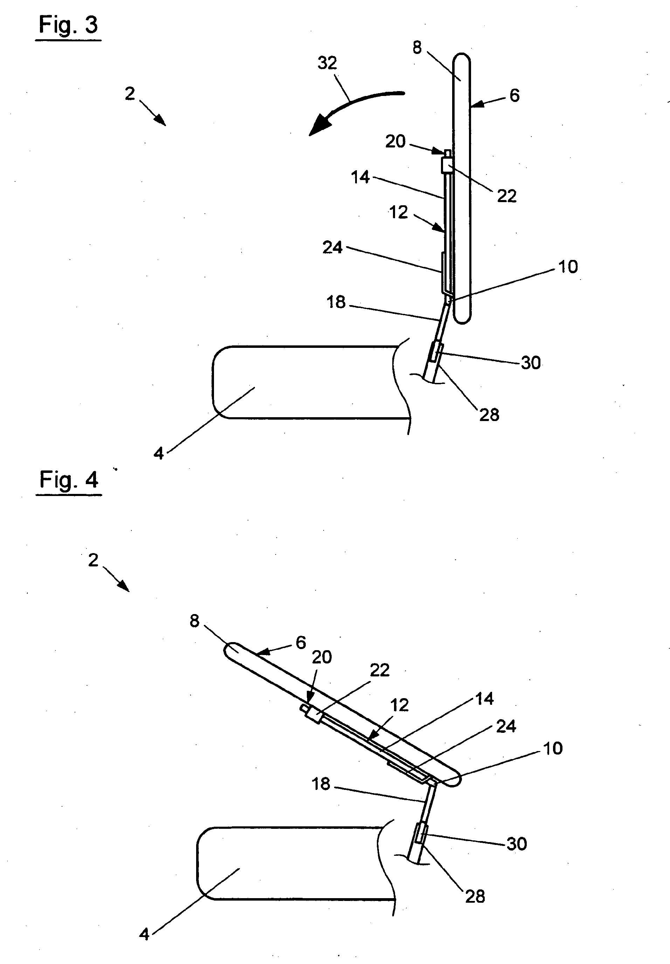

Wird nun die Arretierung gelöst, so bewirkt die vorgespannte Drehstabfeder 12 eine Rotation der Rückenlehne 6 um die Schwenkachse 10. Während einer ersten Phase der Schwenkbewegung wird die Rückenlehne 6 durch die Vorspannkraft der Drehstabfeder und entgegen dem Eigengewicht der Rückenlehne 6 von der Gebrauchsstellung in eine Vertikalstellung verschwenkt, die in Fig. 3 gezeigt ist.

Im weiteren Verlaufe der Schwenkbewegung nach dem Erreichen der Vertikalstellung (Fig. 3) wird die Schwenkbewegung nunmehr einerseits durch die Vorspannkraft der Drehstabfeder 12 und andererseits zusätzlich durch das Eigengewicht der Rückenlehne 6 unterstützt. Dies ist so lange der Fall, bis die Rückenlehne 6 eine Zwischenstellung erreicht hat, die zwischen der Vertikalstellung und der Nichtgebrauchsstellung liegt und in Fig. 4 gezeigt ist. Bei Erreichen dieser Zwischenstellung steht die Drehstabfeder 12 nicht mehr unter Vorspannung, was in Fig. 4 dadurch angedeutet ist, dass sich der Stützabschnitt 18 der Drehstabfeder 12 nicht mehr an der Wandung der Aufnahme 18 abstützt. Ab dieser Zwischenstellung bewirkt demzufolge nur noch das Eigengewicht der Rückenlehne 6 ein weiteres Verschwenken der Rückenlehne 6 in die Nichtgebrauchsstellung.

Durch das Eigengewicht der Rückenlehne 6 wird die Rückenlehne 6 anschließend bis in die in Fig. 5 gezeigte im Wesentlichen horizontale Nichtgebrauchsstellung verschwenkt. Entscheidend ist hierbei, dass die Drehstabfeder 6 aufgrund der weiteren Schwenkbewegung der Rückenlehne 6 von der Zwischenstellung (Fig. 4) in die Nichtgebrauchsstellung (Fig. 5) eine Rückstellkraft aufbringt, die dem Eigengewicht der Rückenlehne 6 bzw. der Schwenkrichtung derselben entgegengerichtet ist. Diese Rückstellkraft, die in Fig. 5 anhand des Pfeils 34 dargestellt ist, entsteht dadurch, dass sich der Stützabschnitt 18 nunmehr an der gegenüberliegenden Seite innerhalb der Aufnahme 28 abstützt und die Drehstabfeder 12 somit in entgegengesetzter Richtung gespannt werden kann. Auch wird die Rückstellkraft 34 größer, je mehr sich die Rückenlehne 6 der Nichtgebrauchsstellung nähert. Die Rückstellkraft 34 bewirkt somit ein gedämpftes Verschwenken der Rückenlehne 6 in die Nichtgebrauchsstellung sowie ein einfaches, rückstellkraftunterstütztes Zurückführen der Rückenlehne 6 von der Nichtgebrauchsstellung in die Gebrauchsstellung.

## Patentansprüche

1. Kraftfahrzeugsitz mit einer Rückenlehne (6), die entgegen der Vorspannkraft (32) einer Drehstabfeder (12), die einen abgewinkelten Stützabschnitt (18) aufweist, der innerhalb einer feststehenden Aufnahme (28) abgestützt ist, in einer geneigten Gebrauchsstellung lösbar arretiert ist, wobei die Rückenlehne (6) nach dem Lösen der Arretierung von der Gebrauchsstellung in eine im Wesentlichen horizontale Nichtgebrauchsstellung verschwenkbar ist, und die Drehstabfeder (12) derart mit der Rückenlehne (6) zusammenwirkt, dass die Drehstabfeder (12) zwischen einer Zwischenstellung und der horizontalen Nichtgebrauchsstellung eine dem Eigengewicht der Rückenlehne (6) entgegengerichtete Rückstellkraft (34) aufbringt, **dadurch gekennzeichnet, dass** die Schwenkbewegung der Rückenlehne (6) von der Gebrauchsstellung in die horizontale Nichtgebrauchsstellung durch die Vorspannkraft (32) und das Eigengewicht der Rückenlehne (6) bewirkbar ist und der Stützabschnitt (18) und/oder die Aufnahme einen Dämpfüngsüberzug (30) aufweist.

2. Kraftfahrzeugsitz nach Anspruch 1, **dadurch gekennzeichnet, dass** die Rückenlehne (6) von der geneigten Gebrauchsstellung durch die Vorspannkraft (32) der Drehstabfeder (12) und entgegen dem Eigengewicht der Rückenlehne (6) in eine Vertikalstellung und von der Vertikalstellung in die horizontale Nichtgebrauchsstellung verschwenkbar ist, wobei das Verschwenken zwischen der Vertikalstellung und der Nichtgebrauchsstellung durch das Eigengewicht der Rückenlehne (6) unterstützt ist.

3. Kraftfahrzeugsitz nach Anspruch 2, **dadurch gekennzeichnet, dass** die Zwischenstellung zwischen der Vertikalstellung und der Nichtgebrauchsstellung liegt.

4. Kraftfahrzeugsitz nach einem der vorangehenden Ansprüche, **dadurch gekennzeichnet, dass** die Drehstabfeder (12) einen bogenförmigen ersten Abschnitt (14), dessen freies Ende (20) an der Rückenlehne (6) angeordnet ist, und einen geraden zweiten Abschnitt (16) aufweist, demgegenüber der Stützabschnitt (18) abgewinkelt ist.

5. Kraftfahrzeugsitz nach Anspruch 4, **dadurch gekennzeichnet, dass** das freie Ende (20) des ersten Abschnitts (14) in einer Führung (22) an der Rückenlehne (6) rotierbar und längsverschiebbar geführt ist.

6. Kraftfahrzeugsitz nach Anspruch 5, **dadurch gekennzeichnet, dass** die Führung (22) eine das freie Ende (20) umgebende Hülse ist.

7. Kraftfahrzeugsitz nach einem der Ansprüche 4 bis 6, **dadurch gekennzeichnet, dass** ein Stützelement (24) an der Rückenlehne (6) vorgesehen ist, an dem der bogenförmige erste Abschnitt (14) der Drehstabfeder (12) seitlich abgestützt ist.

8. Kraftfahrzeugsitz nach einem der Ansprüche 5 bis 7, **dadurch gekennzeichnet, dass** die Führung (22) und/oder das Stützelement (24) an einem Lehnenrahmen (8) der Rückenlehne (6) befestigt sind.

9. Kraftfahrzeugsitz nach einem der vorangehenden Ansprüche, **dadurch gekennzeichnet, dass** der Dämpfungsüberzug (30) ein Kunststoff- oder Gummiüberzug ist.

10. Kraftfahrzeugsitz nach einem der vorangehenden Ansprüche, **dadurch gekennzeichnet, dass** sich der zweite Abschnitt (16) der Drehstabfeder (12) entlang der Schwenkachse (10) der Rückenlehne (6) erstreckt.

11. Kraftfahrzeugsitz nach einem der vorangehenden Ansprüche, **dadurch gekennzeichnet, dass** ein zusätzlicher Dämpfungsmechanismus (26) vorgesehen ist, der die Schwenkbewegung der Rückenlehne (6) verlangsamt.

## Claims

1. A motor vehicle seat, comprising a backrest (6) which is releasably locked in an inclined in-use position against the preloading force (32) of a torsion-bar spring (12) having a bent-off support section (18) which is supported within a fixed receiver (28), wherein the backrest (6) can be pivoted from the in-use position to a substantially horizontal non-use position after releasing the locking, and the torsion-bar spring (12) cooperates with the backrest (6) in such a way that the torsion-bar spring (12) exerts a restoring force (34) directed against the dead weight of the backrest (6) between an intermediate position and the horizontal non-use position, **characterized in that** the pivoting movement of the backrest (6) from the in-use position to the horizontal non-use position can be produced by the preloading force (32) and the dead weight of the backrest (6), and the support section (18) and/or the receiver have a damping cover (30).

2. A motor vehicle seat according to claim 1, **characterized in that** the backrest (6) can be pivoted from the inclined in-use position by the preloading force (32) of the torsion-bar spring (12) and against the dead weight of the backrest (6) to a vertical position, and from the vertical position to the horizontal non-use position, wherein the pivoting between the vertical position and the non-use position is supported by the dead weight of the backrest (6).

3. A motor vehicle seat according to claim 2, **characterized in that** the intermediate position lies between the vertical position and the non-use position.

4. A motor vehicle seat according to one of the preceding claims, **characterized in that** the torsion-bar spring (12) comprises an arc-shaped first section (14), whose free end (20) is arranged on the backrest (6), and a straight second section (16), against which the support section (18) is bent off.

5. A motor vehicle seat according to claim 4, **characterized in that** the free end (20) of the first section (14) is guided in a rotatable and longitudinally displaceable manner in a guide (22) in the backrest (6).

6. A motor vehicle seat according to claim 5, **characterized in that** the guide (22) is a sleeve enclosing the free end (20).

7. A motor vehicle seat according to one of the claims 4 to 6, **characterized in that** a support element (24) is provided on the backrest (6), on which the arc-shaped first section (14) of the torsion-bar spring (12) is laterally supported.

8. A motor vehicle seat according to one of the claims 5 to 7, **characterized in that** the guide (22) and/or the support element (24) are fixed to a backrest frame (8) of the backrest (6).

9. A motor vehicle seat according to one of the preceding claims, **characterized in that** the damping cover (30) is a plastic or rubber cover.

10. A motor vehicle seat according to one of the preceding claims, **characterized in that** the second section (16) of the torsion-bar spring (12) extends along the pivoting axis (10) of the backrest (6).

11. A motor vehicle seat according to one of the preceding claims, **characterized in that** an additional damping mechanism (26) is provided which slows down the pivoting movement of the backrest (6).

## Revendications

1. Siège de véhicule à moteur avec un dossier de siège (6) qui est bloqué d'une façon pouvant être débloquée dans une position d'utilisation inclinée, contre la force de précontrainte (32) d'un ressort à barre de torsion (12) présentant une partie d'appui (18) coudée qui s'appuie dans un réceptacle fixe (28), le dossier de siège (6) pouvant être basculé après que le blocage a été débloqué de la position d'utilisation à une position de non-utilisation sensiblement horizontale, et le ressort à barre de torsion (12) coopérant avec le dossier de siège (6) de telle manière que le ressort à barre de torsion (12) exerce entre une position intermédiaire et la position de non-utilisation horizontale une force de rappel (34) dirigée en sens inverse du poids propre du dossier de siège (6), **caractérisé en ce que** le mouvement basculant du dossier de siège (6) de la position d'utilisation à la position de non-utilisation horizontale peut être réalisé par la force de précontrainte (32) et le poids propre du dossier de siège (6) et la partie d'appui (18) et/ou le réceptacle présentent un revêtement amortissant (30).

2. Siège de véhicule à moteur selon la revendication 1, **caractérisé en ce que** le dossier de siège (6) peut être basculé de la position d'utilisation inclinée à une position verticale par la force de précontrainte (32) du ressort à barre de torsion (12) et contre le poids propre du dossier de siège (6) et de la position verticale à la position de non-utilisation horizontale, le basculement entre la position verticale et la position de non-utilisation étant facilité par le poids propre du dossier de siège (6).

3. Siège de véhicule à moteur selon la revendication 2, **caractérisé en ce que** la position intermédiaire se situe entre la position verticale et la position de non-utilisation.

4. Siège de véhicule à moteur selon l'une des revendications précédentes, **caractérisé en ce que** le ressort à barre de torsion (12) présente une première partie (14) en arc de cercle, dont l'extrémité libre (20) est disposée sur le dossier de siège (6), et une deuxième partie (16) droite par rapport à laquelle la partie d'appui (18) est coudée.

5. Siège de véhicule à moteur selon la revendication 4, **caractérisé en ce que** l'extrémité libre (20) de la première partie (14) est guidée avec possibilité de rotation et de translation dans un guide (22) sur le dossier de siège (6).

6. Siège de véhicule à moteur selon la revendication 5, **caractérisé en ce que** le guide (22) est une douille entourant l'extrémité libre (20).

7. Siège de véhicule à moteur selon l'une des revendications 4 à 6, **caractérisé en ce qu'**un élément d'appui (24) est prévu sur le dossier de siège (6), sur lequel la première partie (14) en arc de cercle du ressort à barre de torsion (12) s'appuie latéralement.

8. Siège de véhicule à moteur selon l'une des revendications 5 à 7, **caractérisé en ce que** le guide (22) et/ou l'élément d'appui (24) sont fixés sur un cadre de dossier (8) du dossier de siège (6).

9. Siège de véhicule à moteur selon l'une des revendications précédentes, **caractérisé en ce que** le revêtement amortissant (30) est un revêtement en plastique ou en caoutchouc.

10. Siège de véhicule à moteur selon l'une des revendications précédentes, **caractérisé en ce que** la deuxième partie (16) du ressort à barre de torsion (12) s'étend le long de l'axe de basculement (10) du dossier de siège (6).

11. Siège de véhicule à moteur selon l'une des revendications précédentes, **caractérisé en ce qu'**il est prévu un mécanisme d'amortissement supplémentaire (26) qui ralentit le mouvement basculant du dossier de siège (6).
